## Europäisches Patentamt
## European Patent Office
## Office européen des brevets

(19)

(11) Veröffentlichungsnummer : **0 064 260**
**B2**

(12) **NEUE EUROPÄISCHE PATENTSCHRIFT**

(45) Veröffentlichungstag der neuen Patentschrift :
19.10.88

(51) Int. Cl.⁴ : **H 04 L 11/02**, H 04 L 17/00

(21) Anmeldenummer : **82103579.7**

(22) Anmeldetag : **27.04.82**

(54) Verfahren und Anordnung zum Erzeugen von Wählsignalen in Fernschreibmaschinen.

(30) Priorität : **30.04.81 DE 3117305**

(43) Veröffentlichungstag der Anmeldung :
**10.11.82 Patentblatt 82/45**

(45) Bekanntmachung des Hinweises auf die Patenterteilung : **05.12.84 Patentblatt 84/49**

(45) Bekanntmachung des Hinweises auf die Entscheidung über den Einspruch : **19.10.88 Patentblatt 88/42**

(84) Benannte Vertragsstaaten :
**CH FR GB IT LI SE**

(56) Entgegenhaltungen :
DE-A- 2 552 447
DE-A- 2 844 559
DE-C- 2 354 057
SIEMENS ZEITSCHRIFT, 50. Jahrgang, April 1976, Heft 4, Berlin und München, DE, H. HELMRICH "Der Fernschreiber 1000", Seiten 185-189
SIEMENS ZEITSCHRIFT, 50. Jahrgang, April 1976, Heft 4, Berlin und München, DE, L. KREUZHOLZ "Datenfernschaltgeräte DFG 300 und DFG 2400 für digitale Datennetze", Seiten 193-197
Hasler-Mitteilungen, 38. Jahrg., Heft 2, Juni 1979(Sonderheft Fernschreiber Hasler SP 300)
Operating instructions Teleprinter Hasler SP 300, Hasler, 13t-I, 09.79, P.11773

(73) Patentinhaber : **Siemens Aktiengesellschaft Berlin und München**
**Wittelsbacherplatz 2**
**D-8000 München 2 (DE)**

(72) Erfinder : **Günther, Gerd-Joachim, Ing.grad.**
**Gailenreuther Strasse 19**
**D-8000 München 60 (DE)**

EP 0 064 260 B2

**Beschreibung**

Die Erfindung bezieht sich auf ein Verfahren zum Erzeugen von Wählsignalen in Fernschreibmaschinen gemäß dem Oberbegriff des Patentanspruchs 1. Weiterhin bezieht sich die Erfindung auf eine Anordnung zur Durchführung des Verfahrens.

Zum Herstellen einer Verbindung zwischen zwei Fernschreibmaschinen mittels einer Vermittlungsstelle ist es allgemein bekannt, dass zunächst an der rufenden Fernschreibmaschine eine Anruftaste betätigt wird. Anschliessend werden von der Vermittlungsstelle Signale zur Fernschreibmaschine übertragen, die den Teilnehmer zum Eingeben von dem fernen Teilnehmer zugeordneten Wählzeichen auffordern. Bei einer Nummernschalterwahl werden die Wählzeichen in einzelne Wählimpulse umgesetzt und bei der Verwendung der Codewahl werden die Wählzeichen als Codewörter zur Vermittlungsstelle übertragen.

Aus der DE-PS Nr. 2354057 ist es bekannt, bei einer Fernschreibmaschine die Wählsignale, d. h. die Wählimpulse oder die codierten Wählzeichen unter Verwendung der alphanumerischen Tastatur einer Fernschreibmaschine einzugeben. Ein Wählsignalgeber setzt die beispielsweise mittels der Zifferntasten der Tastatur eingegebenen Wählzeichen in die Wählsignale um und gibt sie über eine Fernschalteinheit und eine Fernleitung an die Vermittlungsstelle ab.

Eine manuelle Eingabe der Wählzeichen mittels der Tastatur ist vor dem Empfang der von der Vermittlungsstelle abgegebenen Signale nicht vorgesehen. Zweckmäßigerweise wird die Tastatur beim Empfang der Signale gesperrt.

Aus einer Firmendruckschrift Hasler Mitteilungen, 38. Jg., Heft 2, Juni 1979 (Sonderheft Fernschreiber Hasler SP300) und einer Bedienungsanleitung dieses Fernschreibers 13t-l, 09.79, P.11 773 ist es bekannt, die Wahl unter Verwendung von in der Fernschreibmaschine gespeicherten Wählzeichen durchzuführen. Die Wählzeichen können nach dem Betätigen einer oder mehrerer Tasten an der Tastatur aufgerufen werden, noch bevor die Signale von der Vermittlungsstelle eintreffen.

Sowohl bei der manuellen Eingabe der Wählzeichen mittels der Tastatur als auch bei der Erzeugung der Wählsignale unter Verwendung von gespeicherten Wählzeichen muß sichergestellt sein, daß diese erst zur Vermittlungsstelle übertragen werden, wenn von dieser Signale empfangen worden sind. Andernfalls kann es zu einem fehlerhaften Ablauf des Wählvorgangs kommen.

Der Erfindung liegt daher die Aufgabe zugrunde, ein Verfahren und eine Anordnung anzugeben, die es ermöglichen, eine fehlerfreie Wahl auch dann durchzuführen, wenn in der Fernschreibmaschine gespeicherte Wählzeichen vor dem Eintreffen der von der Vermittlungsstelle abgegebenen Signale aufgerufen werden.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäss der Erfindung hat den Vorteil, dass die Bedienung der Fernschreibmaschine beim Wählen eines fernen Teilnehmers sehr stark vereinfacht wird. Die Vereinfachung wirkt sich insbesondere dann aus, wenn der Wählvorgang entsprechend der allgemein bekannten Codewahl durchgeführt wird. Der Wählvorgang wird durch die Bedienperson sehr schnell durchgeführt, da sie nicht das Ende der von der Vermittlungsstelle abgegebenen Signale abwarten muss.

Zur Feststellung des Endes der von der Vermittlungsstelle abgegebenen Signale ist es vorteilhaft, wenn die von der Vermittlungsstelle abgegebenen Signale mittels einer Zeitstufe überwacht werden und dass die selbsttätige Umsetzung der gespeicherten Wählzeichen in die Wählsignale dann ausgelöst wird, wenn während einer vorgegebenen Zeitdauer von der Vermittlungsstelle keine Signale empfangen werden.

Das Verfahren wird insbesondere dann in vorteilhafter Weise eingesetzt, wenn als Wahl mittels gespeicherter Wählzeichen eine Rufwiederholung vorgesehen ist, bei der die Wählzeichen in einem Rufwiederholspeicher gespeichert sind, oder wenn als Wahl mittels gespeicherter Wählzeichen eine Kurzwahl vorgesehen ist, bei der die Wählzeichen einer Mehrzahl von fernen Teilnehmern in einem Speicher gespeichert sind.

Das Verfahren ist auch in vorteilhafter Weise bei einer mehrstufigen Codewahl einsetzbar, wenn die selbsttätige Umsetzung der Wählzeichen in die Wählsignale während eines Wählvorgangs mehrmals und jeweils nach dem Empfang der von der Vermittlungsstelle abgegebenen Signale erfolgt.

Zum Sicherstellen eines ungestörten Ablaufs eines in der Fernschreibmaschine vorgesehenen Kennungsgebers ist es günstig, wenn nach einer Aufforderung zur Abgabe der Kennung einer Fernschreibmaschine diese zuerst abgegeben wird und anschliessend die Wählsignale erzeugt werden.

Zur Überwachung des Wählvorgangs und zur Protokollierung ist es von Vorteil, wenn die Wählzeichen während des Wählvorgangs am Drucker der Fernschreibmaschine abgedruckt werden oder wenn bei einer Eingabe von Wählzeichen mittels der Tastatur vor dem Empfang der Signale von der Vermittlungsstelle ein Fehlerausdruck am Drucker der Fernschreibmaschine erfolgt.

Eine vorteilhafte Anordnung zur Durchführung des Verfahrens ist dadurch gekennzeichnet, daß bei einer Fernschreibmaschine mit einem Mikrorechner dieser Mikrorechner für die Überwachung der von der Vermittlungsstelle abgegebenen Signale eine Zeitstufe enthält. Hierbei ist es vorteilhaft, wenn die Zeitstufe eine Zählstufe enthält, die von einem Zähltakt konstanter Folgefrequenz fortgeschaltet wird, die jeweils beim Erreichen eines vorgegebenen Zählerstands ein das Ende einer vorgegebenen Zeitdauer anzeigendes Signal erzeugt und die durch die zu überwachenden Signale jeweils zurückgesetzt wird.

Im folgenden wird eine Durchführung des erfindungsgemässen Verfahrens anhand einer in den Zeichnungen dargestellten entsprechenden Anordnung beschrieben. Es zeigen

Fig. 1 ein Blockschaltbild einer Fernschreibmaschine,

Fig. 2 ein Blockschaltbild einer Wählstufe,

Fig. 3 ein Blockschaltbild einer in der Wählstufe vorhandenen Schaltstufe.

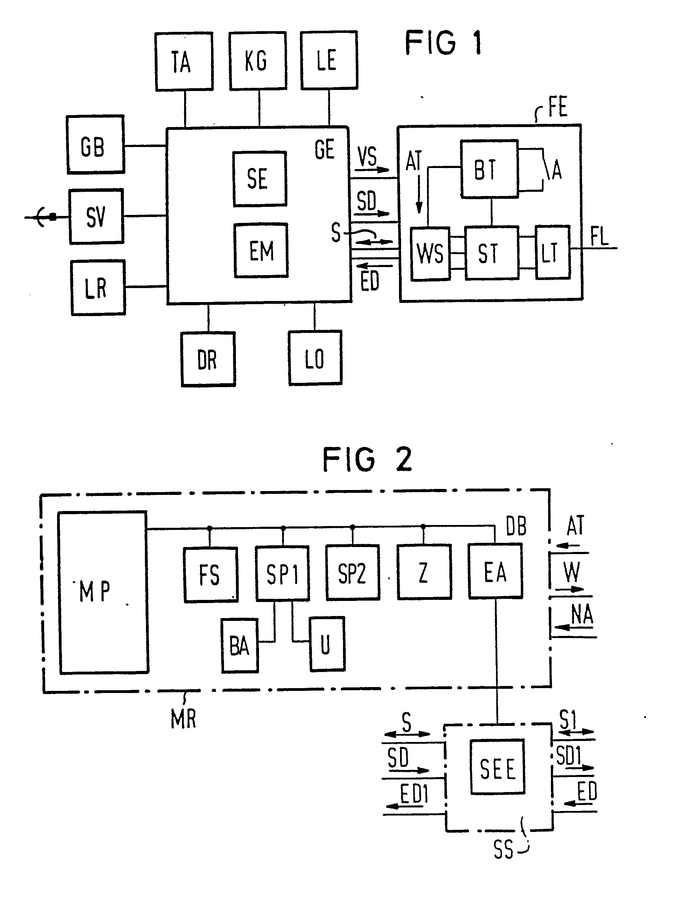

Die in Fig. 1 dargestellte Fernschreibmaschine enthält eine Grundelektronik GE, die die zentrale Steuereinheit für alle logischen Funktionen darstellt. Sie enthält eine Sendeeinheit SE und eine Empfangseinheit EM. An der Sendeeinheit SE sind eine Tastatur TA, ein Kennungsgeber KG und ein Lochstreifenleser LE angeschlossen. An der Empfangseinheit EM sind ein Drucker DR und ein Lochstreifenlocher LO angeschlossen. An der Grundelektronik GE ist weiterhin ein Gerätebedienteil GB angeschlossen. Dieser enthält die Bedienungs- und Anzeigeelemente für die Gerätefunktionen, beispielsweise für das Aufheben einer Sperre der Tastatur TA, für das Auslösen des Kennungsgebers KG und für das Dauereinschalten des Lochers LO. Weiterhin ist die Grundelektronik GE mit einer Stromversorgung SV verbunden, die alle für den Betrieb der Fernschreibmaschine erforderlichen Spannungen und Ströme liefert. Ausserdem ist ein Lautsprecher LR vorgesehen, der beim Erreichen eines Zeilenendes durch das Druckwerk oder beim Verbindungsaufbau akustische Signale erzeugt.

Die Verbindung zu einer Fernleitung FL wird mittels einer Fernschalteinheit FE hergestellt. Diese enthält einen Bedienteil BT, der die Bedienungs- und Anzeigeelemente für die Vermittlungsfunktionen umfasst. Ein derartiges Bedienungselement ist beispielsweise eine Anruftaste A. Der Bedienteil BT ist mit einer Wählstufe WS verbunden, die die Wählsignale, nämlich die Nummernimpulse oder die Codewahlsignale für das Wählen eines fernen Teilnehmers, erzeugt.

Weiterhin ist der Bedienteil BT mit einem Steuerteil ST verbunden, der die digitalen Schaltungen für die Vermittlungsfunktionen, wie beispielsweise für das Aufbauen und Auslösen einer Verbindung, enthält. Dem Steuerteil ST ist ein Leitungsanpassungsteil LT nachgeschaltet, der die analogen Schaltungen für die Übertragung über die Fernleitung FL enthält.

Zwischen der Grundelektronik GE und der Fernschalteinheit FE werden die Sendedaten SD, die Empfangsdaten ED, Steuersignale S und Versorgungsspannungen VS übertragen. Ein Teil der Steuersignale S wird durch die Wählstufe WS zum Steuerteil ST durchgeschleift.

Beim Wählen des fernen Teilnehmers wird der Wählstufe WS nach dem Betätigen der Anruftaste A ein Signal AT zugeführt, das die Wählstufe WS für die Erzeugung der Wählsignale vorbereitet. Die Vermittlungsstelle überträgt über die Fernleitung an die Fernschreibmaschine Signale, durch die die Bedienperson an der Fernschreibmaschine zum Wählen des fernen Teilnehmers aufgefordert wird. Das Wählen des fernen Teilnehmers kann dadurch erfolgen, dass an der Fernschreibmaschine mittels der Tastatur TA Wählzeichen eingegeben werden, die als Sendedaten SD der Wählstufe WS zugeführt werden. Diese erzeugt in Abhängigkeit von den Sendedaten SD die Wählsignale und gibt sie über die Fernleitung FL an die Vermittlungsstelle ab. Die Eingabe der Wählzeichen ist erst nach dem Empfangen der von der Vermittlungsstelle abgegebenen Signale gestattet.

Während des Empfangs der Signale wird daher die Tastatur gesperrt.

Die Wählstufe WS enthält einen Speicher, in dem eine Mehrzahl von aus Wählzeichen gebildeten Rufnummern von fernen Teilnehmern gespeichert sind, zu denen häufig eine Verbindung hergestellt werden soll. Den Wählzeichen sind Buchstabenkombinationen zugeordnet, die vorteilhafterweise eine mnemotechnische Abkürzung des jeweiligen fernen Teilnehmers darstellen. Wenn nach dem Betätigen der Anruftaste A die Vermittlungsstelle zum Wählen des fernen Teilnehmers auffordert und dann über die Tastatur TA der Fernschreibmaschine anstelle von Ziffern eine Buchstabenkombination eingegeben wird, die der Wählstufe WS in Form der Sendedaten SD zugeführt wird, stellt die Wählstufe WS fest, dass es sich um eine Kurzwahl handelt. Der Inhalt des Speichers wird nun ausgelesen und es wird geprüft, ob die entsprechende Buchstabenkombination gespeichert ist. Wenn dies der Fall ist, werden in Abhängigkeit von den Wählzeichen Wählsignale erzeugt, die als Nummernschaltimpulse W oder als Codewahlsignale über die Fernleitung FL übertragen werden.

In dem Speicher oder in einem weiteren Speicher kann auch jeweils eine aus Wählzeichen gebildete Rufnummer für eine Rufwiederholung zwischengespeichert werden. Nach dem Betätigen der Anruftaste A und dem Betätigen einer Wiederholtaste, beispielsweise der Taste für das Zeichent +, werden dann unter Verwendung der gespeicherten Wählzeichen die Wählsignale erzeugt.

Wenn nach dem Betätigen der Anruftaste A, bevor die zum Wählen auffordernden Signale bei der Fernschreibmaschine eintreffen, entweder die Kurzwahl durch das Eingeben einer Buchstabenkombination oder die Rufwiederholung durch die Betätigung der Wiederholtaste ausgelöst wird, ermittelt die Wählstufe WS die Wählart und stellt die im Speicher gespeicherten Wählzeichen bereit. Anschliessend überwacht die Wählstufe WS die von der Vermittlungsstelle empfangenen Signale. Wenn während einer vorgegebenen Zeitdauer von beispielsweise 3 s keine weiteren Zeichen empfangen werden, wird das Ende der Signale erkannt und die Wählzeichen werden in Wählsignale umgesetzt und über die Fernleitung FL übertragen. Wenn das letzte empfangene Zeichen das Zeichen Wer da ? war, wird die Überwachung sofort beendet, damit der Kennungsgeber KG ungestört ablaufen kann. Auch der Kennungsgeber ablauf wird überwacht, um das Ende der übertragenen Kennung zu ermitteln. Anschliessend können dann wieder Wählzeichen in Wählsignale umgesetzt werden und über die Fernleitung FL übertragen werden.

Die in Fig. 2 dargestellte Wählstufe WS wird aus einem im Handel unter der Bezeichnung SKC85 erhältlichen Mikrorechner MR und einer Schaltstufe SS gebildet. Der Mikrorechner MR enthält einen Mikroprozessor MP, an dem über einen Datenbus DB ein Festwertspeicher FS, Schreib-Lesespeicher SP1 und SP2, eine Zählstufe Z und eine Ein/Ausgabeeinheit EA angeschlossen sind. Der Festwertspeicher FS enthält das Mikroprogramm, während der Speicher SP1 als Kurzwahlspeicher und/oder als Rufwiederholspeicher ausgebildet ist. Der Speicher SP2 ist als Arbeitsspeicher vorgesehen, und die Zählstufe Z dient zum Erzeugen der vorgegebenen Zeitdauer bei der Überwachung der über die Fernleitung FL übertragenen Signale. Die Ein/Ausgabeeinheit EA ist ein im Handel unter der Bezeichnung 8255 erhältlicher integrierter Schaltkreis, der die Verbindung des Mikroprozessors MP zu angeschlossenen Einheiten herstellt. Die Ein/Ausgabeeinheit EA ist mit dem Bedienteil BT und mit dem Steuerteil ST verbunden. Ausserdem ist an ihr die Schaltstufe SS angeschlossen.

Ein wesentlicher Bestandteil der Schaltstufe SS ist eine Sende-Empfangseinheit SEE, die im Handel unter der Bezeichnung 8251 erhältlich ist. Ausserdem enthält die Schaltstufe SS binäre Verknüpfungsglieder.

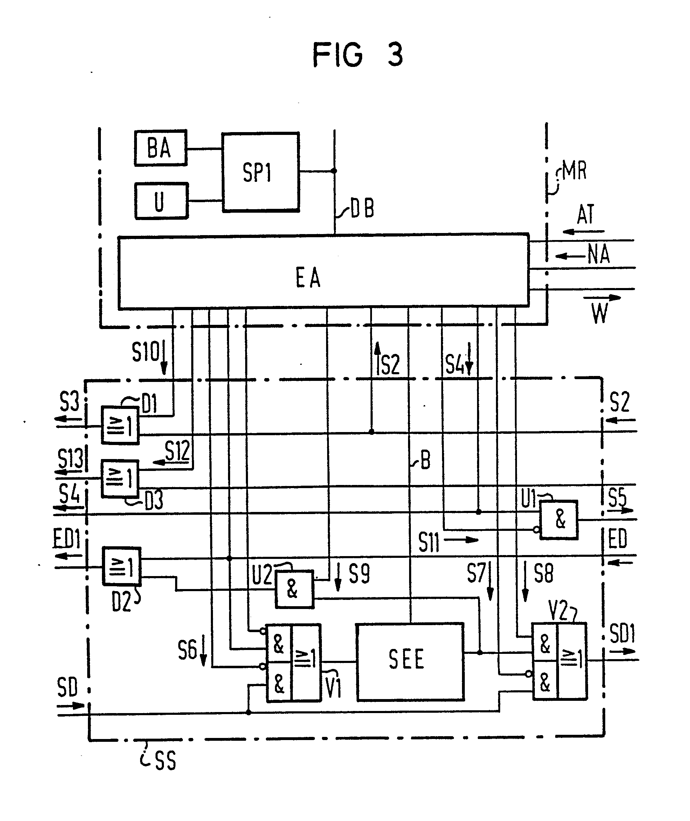

Weitere Einzelheiten der Wählstufe WS werden im folgenden im Zusammenhang mit dem in Fig. 3 dargestellten Schaltbild der Schaltstufe SS beschrieben.

Die in Fig. 3 dargestellte Schaltstufe SS ist einerseits über einen Datenbus B und andererseits über eine Mehrzahl von Anschlussleitungen an der Ein/Ausgabeeinheit EA angeschlossen. Ausserdem ist sie mit der Grundelektronik GE und dem Steuerteil ST verbunden.

Wenn am Bedienteil BT die Anruftaste A betätigt wird, wird das Signal AT der Ein/Ausgabeeinheit EA zugeführt. Im Mikrorechner MR wird damit ein dem Wählvorgang zugeordnetes Mikroprogramm aufgerufen. Im folgenden wird angenommen, dass es sich bei dem Wählvorgang um eine Codewahl handelt. Wenn nach dem Betätigen der Anruftaste A die Vermittlungsstelle Signale zur Fernschreibmaschine überträgt, werden diese als Empfangsdaten ED der Wählstufe WS zugeführt. Der Steuerteil ST erzeugt ein Signal S2, das den Leitungsbetrieb in der Fernschreibmaschine einstellt. Das Signal S2 wird als Signal S3 der Grundelektronik GE zugeführt.

Der Mikrorechner MR überwacht mittels der Zeitstufe Z die als Empfangsdaten ED empfangenen Signale. Solange sie vorhanden sind, wird mittels eines Signals S4 die Tastatur TA gesperrt. Wenn das Ende der Signale erkannt wird, wird die Tastatur TA freigegeben und die Wählzeichen können eingegeben werden, die als Sendedaten SD über das Verknüpfungsglied V1 der Sende-Empfangseinheit SEE und über den Datenbus B dem Mikrorechner MR zugeführt werden. Die Wählzeichen werden im Mikrorechner MR in Codewahlsignale umgesetzt, die als Sendedaten SD1 über das Verknüpfungsglied V2 unter Steuerung des Signals S5 abgegeben werden. Bei einer Nummernschalterwahl werden die Wählzeichen in Wählsignale umgesetzt, die eine Impulsreihe darstellen und als Signale W dem Steuerteil ST zugeführt werden.

Wenn die ersten eingegebenen Wählzeichen keine Zifferzeichen, sondern Buchstabenkombinationen oder einer Wiederholtaste zugeordnete Zeichen sind, stellt der Mikrorechner MR fest, dass es sich um eine Kurzwahl bzw. um eine Rufwiederholung handelt. Aus dem Speicher SP1 werden im Fall der Kurzwahl die Buchstabenkombinationen ausgelesen und mit der eingegebenen Buchstabenkombination verglichen. Wenn die entsprechende Buchstabenkombination vorhanden ist, werden die zugehörigen Wählzeichen ausgelesen und im Fall der Codewahl über das Verknüpfungsglied V2 als Sendedaten SD1 abgegeben. Im Fall der Rufwiederholung werden die in entsprechenden Speicherstellen im Speicher SP1 gespeicherten Wählzeichen ausgelesen und ebenfalls als Sendedaten SD1 abgegeben.

Der Speicher SP1 ist vorzugsweise als Halbleiterspeicher ausgebildet. Da derartige Halbleiterspeicher üblicherweise flüchtig sind, d. h. die in ihnen gespeicherte Information nach dem Abschalten der Betriebsspannung verlorengeht, ist an dem Speicher SP1 eine Batterie BA angeschlossen, die die Spannungsversorgung übernimmt, falls die Betriebsspannung VS der Fernschreibmaschine nicht mehr vorhanden ist. Die Betriebsspannung VS wird durch eine Umschalteinheit U überwacht, die gegebenenfalls selbsttätig die Spannungsversorgung von der Betriebsspannung VS auf die Batterie BA umschaltet.

Die Überwachung der von der Vermittlungsstelle abgegebenen Signale erfolgt dadurch, dass als Zeitstufe eine Zählstufe Z vorgesehen ist, die mit jedem empfangenen Signal auf einen vorgegebenen Wert eingestellt wird, die durch einen Zähltakt konstanter Folgefrequenz fortgeschaltet wird und die beim Erreichen eines Zählerstandes, der der vorgegebenen Zeitdauer von beispielsweise 3 s entspricht, ein Signal erzeugt. Die Zählstufe Z wird mit jedem empfangenen Signal zurückgesetzt. Wenn keine Signale mehr empfangen werden, erreicht sie den vorgegebenen Zählerstand und gibt das entsprechende Signal ab, das im Mikrorechner MR verarbeitet wird.

Wenn unmittelbar nach dem Betätigen der Anruftaste A eine Buchstabenkombination eingegeben wird oder die Wiederholtaste betätigt wird, bevor die Signale von der Vermittlungsstelle empfangen werden und bevor damit die Tastatur TA gesperrt ist, ermittelt der Mikrorechner MR die Wählart, nämlich die Kurzwahl oder die Rufwiederholung. Anschliessend bereitet er die Erzeugung der Wählsignale vor. Mit dem Aussenden der Wählsignale darf jedoch erst begonnen werden, wenn die von der Vermittlungsstelle empfangenen Signale beendet sind. Der Mikrorechner MR überwacht daher die Empfangsdaten ED mittels der Zählstufe Z. Wenn während der 3 s keine Empfangsdaten ED mehr eintreffen, werden aus den Wählzeichen die Wählsignale erzeugt und als Sendedaten SD1 abgegeben.

Die als Sendedaten SD1 abgegebenen Wählzeichen können im Steuerteil ST als Empfangsdaten ED zurückgeschleift werden und der Grundelektronik als Signale ED1 zugeführt werden. Dort können sie an dem Drucker DR zur Überwachung und zur Protokollierung abgedruckt werden. Das Zurückschleifen ist auch dadurch möglich, dass die von der Sende-Empfangseinheit SEE abgegebenen Signale unter Steuerung durch ein Signal S6 über ein UND-Glied U1 und ein ODER-Glied D1 zurückgeführt werden.

Falls das letzte von den von der Vermittlungsstelle empfangenen Signale ED dem Zeichen Wer da ? zugeordnet ist, wird die Überwachung mittels der Zählstufe Z sofort unterbrochen und der eigene Kennungsgeber KG wird ausgelöst. Anschliessend überwacht der Mikrorechner MR mittels der Zählstufe Z das Ende der vom Kennungsgeber KG abgegebenen Kennung. Nach Ablauf der Kennung kann bei einer mehrstufigen Codewahl eine weitere Folge von Wählzeichen als Wählsignalefolge ausgegeben werden.

Die Zählstufe Z dient auch bei der normalen Tastaturwahl zum Überwachen der von der Vermittlungsstelle abgegebenen Signale. Wie bereits erwähnt, wird beim Empfang der Signale die Tastatur TA sofort gesperrt. Wenn nach Ablauf der Zeitdauer von 3 s keine Signale mehr empfangen werden, wird vom Mikrorechner MR ein Signal S7 erzeugt, das über ein ODER-Glied D2 der Grundelektronik GE zugeführt wird und dort am Lautsprecher LR ein akustisches Signal auslöst, das der Bedienperson die Wahlbereitschaft anzeigt. Gleichzeitig wird die Tastatur TA wieder freigegeben.

Auch bei einer mehrstufigen Codewahl mittels der Tastatur TA wird die Wahlbereitschaft der weiteren Stufen in ähnlicher Weise akustisch angekündigt. Falls keine weiteren Wahlfolgen erforderlich sind, wird der Wählvorgang mit dem Eintasten der Zeichen Wagenrücklauf, Zeile oder Neue Zeile abgeschlossen.

Falls die Wählzeichen für eine mehrstufige Codewahl im Speicher SP1 gespeichert sind, werden die einzelnen Wählfolgen selbsttätig nach dem jeweiligen Ende der von der Vermittlungsstelle empfangenen Signale ausgegeben. In diesem Fall erfolgt ebenfalls die Überwachung der von der Vermittlungsstelle abgegebenen Signale unter Verwendung der Zählstufe Z. Wenn jeweils nach Ablauf der vorgegebenen Zeitdauer von 3 s kein Signal mehr empfangen wird, wird dann die nächste Wählfolge ausgegeben.

**Patentansprüche**

1. Verfahren zum Erzeugen von Wählsignalen in Fernschreibmaschinen, bei dem nach dem Betätigen einer Anruftaste an der Fernschreibmaschine eine Vermittlungsstelle zur Fernschreibmaschine Signale überträgt, die zum Eingeben von einem fernen Teilnehmer zugeordneten Wählzeichen auffordern und bei dem während des Wählvorgangs in Abhängigkeit von den Wählzeichen Wählsignale erzeugt werden, bei dem bei einer Eingabe von eine Wahl mittels gespeicherter Wählzeichen auslösenden Zeichen an der Tastatur (TA) der Fernschreibmaschine vor dem Eintreffen der von der Vermittlungsstelle abgegebenen Signale in der Fernschreibmaschine die Wählart ermittelt wird, daß die Wählzeichen in der Fernschreibmaschine bereitgestellt werden und daß nach dem Empfang der von der Vermittlungsstelle abgegebenen Signale die gespeicherten Wählzeichen selbsttätig in Wählsignale umgesetzt werden und zur Vermittlungsstelle übertragen werden, dadurch gekennzeichnet, daß die von der Vermittlungsstelle abgegebenen Signale mittels einer Zeitstufe überwacht werden und daß die selbsttätige Umsetzung der gespeicherten Wählzeichen in die Wählsignale dann ausgelöst wird, wenn während einer vorgegebenen Zeitdauer von der Vermittlungsstelle keine Signale empfangen werden.

2. Verfahren nach Anspruch 1, dadurch gekennzeichnet, dass als Wahl mittels gespeicherter Wählzeichen eine Rufwiederholung vorgesehen ist, bei der die Wählzeichen in einem Rufwiederholspeicher (SP1) gespeichert sind.

3. Verfahren nach Anspruch 1, dadurch gekennzeichnet, dass als Wahl mittels gespeicherter Wählzeichen eine Kurzwahl vorgesehen ist, bei der die Wählzeichen einer Mehrzahl von fernen Teilnehmern in einem Speicher (SP1) gespeichert sind.

4. Verfahren nach einem der Ansprüche 1 bis 3, dadurch gekennzeichnet, dass die selbsttätige Umsetzung der Wählzeichen in die Wählsignale während eines Wählvorgangs mehrmals und jeweils nach dem Empfang der von der Vermittlungsstelle abgegebenen Signale erfolgt.

5. Verfahren nach Anspruch 4, dadurch gekennzeichnet, dass nach einer Aufforderung zur Abgabe der Kennung einer Fernschreibmaschine diese zuerst abgegeben wird und anschliessend die Wählsignale erzeugt werden.

6. Verfahren nach einem der Ansprüche 1 bis 5, dadurch gekennzeichnet, dass die Wählzeichen während des Wählvorgangs am Drucker (DR) der Fernschreibmaschine abgedruckt werden.

7. Verfahren nach einem der Ansprüche 1 bis 6, dadurch gekennzeichnet, dass bei einer Eingabe von Wählzeichen mittels der Tastatur (TA) vor dem Empfang der Signale von der Vermittlungsstelle ein Fehlerausdruck am Drucker (DR) der Fernschreibmaschine erfolgt.

8. Anordnung zur Durchführung des Verfahrens nach Anspruch 1, bei der eine Wählstufe (WS) vorgesehen ist, die einen Speicher (SP1) enthält, in dem die Wählzeichen gespeichert sind, und die einen Mikrorechner (MR) enthält, der nach der Eingabe der Zeichen die Wählzeichen bereitstellt, der die von der Vermittlungsstelle abgegebenen Signale überwacht und der die Wählzeichen in Wählsignale (W) umsetzt, dadurch gekennzeichnet, daß der Mikrorechner (MR) für die Überwachung der von der Vermittlungsstelle abgegebenen Signale eine Zeitstufe enthält.

9. Anordnung nach Anspruch 8, dadurch gekennzeichnet, daß die Zeitstufe eine Zählstufe (Z) enthält, die von einem Zähltakt konstanter Folgefrequenz fortgeschaltet wird, die jeweils beim Erreichen eines vorgegebenen Zählerstands ein das Ende einer vorgegebenen Zeitdauer anzeigendes Signal erzeugt und die durch die zu überwachenden Signale jeweils zurückgesetzt wird.

**Claims**

1. A method for producing selection signals in teleprinters wherein following the actuation of a call key on the teleprinter a switching centre transmits signals to the teleprinter, which signals request the input of selection characters assigned to a remote subscriber and wherein during the selection process, selection signals are produced in dependence upon the selection characters, and wherein in the event of an input of characters which trigger a selection by means of stored selection characters, on the keyboard (TA) of the teleprinter the type of selection is determined prior to the arrival in the teleprinter of the signals transmitted by the switching centre, that the selection characters are made available in the teleprinter and that after the arrival of the signals transmitted by the switching centre, the stored selection characters are automatically converted into selection signals and are transmitted to the switching centre, characterised in that the signals transmitted by the switching centre are monitored by means of a timing stage, and that the automatic conversion of the stored selection characters into the selection signals is triggered when during a predetermined period no signals are received from the switching centre.

2. A method as claimed in claim 1, characterised in that as a selection by means of stored selection characters there is provided a call repetition, wherein the selection characters are stored in a call repetition store (SP1).

3. A method as claimed in claim 1, characterised in that as a selection by means of stored selection characters there is provided a short selection wherein the selection characters of a plurality of remote subscribers are stored in a store (SP1).

4. A method as claimed in one of the claims 1 to 3, characterised in that during a selection process the automatic conversion of selection characters into selection signals is effected repeatedly and in each case after the reception of the signals transmitted by the switching centre.

5. A method as claimed in claim 4, characterised in that following a request for emitting the identification code of a teleprinter, first of all said identification code is transmitted and the selection signals are subsequently produced.

6. A method as claimed in one of the claims 1 to 5, characterised in that the selection characters are printed during the selection process on the printer (DR) of the teleprinter.

7. A method as claimed in one of the claims 1 to 6, characterised in that in the event of an input of selection characters by means of the keyboard (TA) prior to the reception of the signals from the switching centre, an error is printed out on the printer (DR) of the teleprinter.

8. An arrangement for the implementation of the method claimed in claim 1, characterised in that there is a provided a selection stage (WS) which includes a store (SP1), in which the selection characters are stored, and which selection stage comprises a microcomputer (MR) which following the input of the characters makes available the selection characters, which monitors the signals transmitted by the switching centre, and which converts the selection characters into selection signals (W), characterised in that the microcomputer (MR) comprises a counting stage (Z) for the monitoring of the signals transmitted by the switching centre.

9. An arrangement as claimed in claim 8, characterised in that the timing stage comprises a counting stage (Z) which is advanced by a counting pulse of constant repetition frequency, which upon reaching a predetermined count produces a signal indicating the end of a predetermined period, and which is reset by the signals to be monitored.

**Revendications**

1. Procédé pour produire des signaux de sélection dans des téléscripteurs, dans lequel, après la manœuvre d'une touche d'appel prévue dans le téléscripteur, un central transmet au téléscripteur des signaux qui sollicitent l'introduction de signes de sélection qui sont associés à un abonné interurbain, et dans lequel, pendant l'opération de sélection des signaux de sélection sont produits en fonction des signes de sélection, et dans lequel, lors de l'introduction, au niveau du clavier (TA) du téléscripteur, de signes déclenchant une sélection à l'aide de signes de sélection mémorisés, on détermine dans le téléscripteur, avant l'arrivée des signaux émis par le central, le genre de sélection, que les signes de sélection sont mis à disposition dans le téléscripteur, et qu'après la réception des signaux émis par le central, les signes de sélection mémorisés sont convertis automatiquement aux signaux de sélection et sont transmis au central, caractérisé par le fait que les signaux émis par le central sont contrôlés à l'aide d'un étage de temporisation et que la conversion automatique des signes de sélection mémorisés en signaux de sélection est déclenchée si, pendant une durée prédéterminée, aucun signal n'est reçu par le central.

2. Procédé selon la revendication 1, caractérisé par le fait qu'il est prévu, en tant que sélection à l'aide de signes de sélection mémorisés, une répétition de l'appel, durant laquelle les signes de sélection sont mémorisés dans une mémoire de répétition d'appel (SP1).

3. Procédé selon la revendication 1, caractérisé par le fait qu'il est prévu, en tant que sélection à l'aide de signes de sélection mémorisés, une sélection abrégée dans laquelle les signes de sélection d'un grand nombre d'abonnés interurbains sont mémorisés dans une mémoire (SP1).

4. Procédé selon l'une des revendications 1 à 3, caractérisé par le fait que la conversion automatique des signes de sélection en les signaux de sélection a lieu à plusieurs reprises et toutes les fois après la réception des signaux qui sont émis par le central.

5. Procédé selon la revendication 4, caractérisé par le fait qu'après une demande pour l'émission de la caractérisation d'un téléscripteur, celle-ci est d'abord émise et ensuite les signaux de sélection sont produits.

6. Procédé selon l'une des revendications 1 à 5, caractérisé par le fait que les signes de sélection sont imprimés, pendant l'opération de sélection, au niveau de l'imprimante (DR) du téléscripteur.

7. Procédé selon l'une des revendications 1 à 6, caractérisé par le fait que lors de l'introduction de signes de sélection à l'aide du clavier (TA) et avant la réception des signaux par le central, a lieu une impression d'erreur au niveau de l'imprimante (DR) du téléscripteur.

8. Dispositif pour la mise en œuvre du procédé selon la revendication 1, dans lequel il est prévu un étage de sélection (WS) qui comporte une mémoire (SP1) dans laquelle sont mémorisés les signes de sélection et qui comporte une microcalculatrice (MR) qui, après l'introduction des signes, met à disposition les signes de sélection, qui contrôle les signaux émis par le central et qui convertit les signes de sélection en signaux de sélection (W), caractérisé par le fait que la microcalculatrice (MR) servant à contrôler les signaux émis par le central, comporte un étage de temporisation.

9. Dispositif selon la revendication 8, caractérisé par le fait que l'étage de temporisation comporte un étage de comptage qui est avancé par une cadence de comptage à fréquence de répétition constante, qui, lorsqu'un état de comptage prédéterminé est atteint, produit un signal indiquant la fin d'une durée prédéterminée et qui est remise à l'état initial par les signaux à contrôler.

FIG 1

FIG 2

# FIG 3